# EUROPÄISCHE PATENTSCHRIFT

(11) **EP 2 547 878 B1**
(45) Veröffentlichungstag und Bekanntmachung des Hinweises auf die Patenterteilung: **18.03.2015**
(21) Anmeldenummer: 11703158.3
(22) Anmeldetag: 18.01.2011
(51) Int. Cl.: F01N 11/00, F01N 13/18, F01N 13/00

(54) **VORRICHTUNG UND VERFAHREN ZUR ABGASMESSUNG**
APPARATUS AND METHOD FOR EXHAUST MEASUREMENT
DISPOSITIF ET PROCÉDÉ POUR MESURER LES GAZ D'ÉCHAPPEMENT

(30) Priorität: 18.03.2010 DE 102010003006
(43) Veröffentlichungstag der Anmeldung: 23.01.2013
(73) Patentinhaber: Robert Bosch GmbH, 70442 Stuttgart (DE)
(72) Erfinder: FIX, Richard, 70839 Gerlingen (DE); WIDENMEYER, Markus, 71101 Schoenaich (DE)
(86) Internationale Anmeldenummer: PCT/EP2011/050571
(87) Internationale Veröffentlichungsnummer: WO 2011/113622

(56) Entgegenhaltungen:
- EP-A1- 1 921 289
- DE-A1-102007 012 056
- DE-A1-102009 018 831
- US-A- 5 241 853
- US-A- 5 911 610

## Beschreibung

### Stand der Technik

Die vorliegende Erfindung bezieht sich auf eine Abgassensoreinheit, eine Abgasmessvorrichtung sowie ein Abgasmessverfahren zum Messen einer Konzentration eines Gases gemäß den unabhängigen Ansprüchen.

Die DE 10 2007 012 056 A1 beschreibt ein System und ein Verfahren zum Verbessern der Sensorleistung eines eingebauten Fahrzeugsensors, beispielsweise eines Abgassensors. Dabei leitet eine Struktur mit einem Einlass und einem Auslass ein Fluid aus einer Leitung zu einem Sensor um, um dem Sensor eine repräsentative Probe des Fluids zu liefern.

Die DE 10 2009 018 831 A1 offenbart ein selbstkalibrierendes Sensorsystem.

Die EP 1 921 289 A1 offenbart eine Abgasreinigungsvorrichtung mit einem Dieselpartikelfilter.

### Offenbarung der Erfindung

Vor diesem Hintergrund wird mit der vorliegenden Erfindung eine Abgassensoreinheit zum Messen einer Konzentration eines Gases zumindest eines Teils eines Abgasstroms, weiterhin eine Abgasmessvorrichtung, in der diese Abgassensoreinheit eingesetzt wird, sowie schließlich ein Abgasmessverfahren zum Messen einer Konzentration eines Gases gemäß den unabhängigen Patentansprüchen vorgestellt. Vorteilhafte Ausgestaltungen ergeben sich aus den jeweiligen Unteransprüchen und der nachfolgenden Beschreibung.

Ein wichtiger Aspekt der Erfindung ist besteht darin, ein Abgassensorgehäuse zu schaffen, bei dem in das Sensorgehäuse eindringendes Abgas nicht vollständig aus dem Abgassensorgehäuse wieder in den Abgasstrom zurückfließt, sondern mindestens teilweise an einer anderen Stelle am Abgassensorgehäuse ausdringt. Durch eine vorherrschende Druckdifferenz zwischen Innen- und Außenraum kann auch an weit vom Hauptabgasstrom entfernten Bereichen im Abgassensorgehäuse eine ausreichend schnelle Gasanströmung bei gleichzeitig möglichst geringer Betriebstemperatur sichergestellt werden.

Gemäß dem hier vorgestellten Ansatz ist der Abgassensor so im Abgasstrom angeordnet, dass er sich in einem Sensorgehäuse befindet, so dass ein kleiner Teilstrom des Abgasgesamtstromes an den Sensor gelangen kann. Jedoch ist gegenüber dem Stand der Technik das Sensorgehäuse im hier vorgestellten Ansatz gegenüber der Außenluft oder einem Bereich im Abgasstrang mit niedrigerem Druck geöffnet. In das Sensorgehäuse einströmendes Abgas strömt somit lediglich teilweise wieder in den Abgaskanal zurück. Vorteilhafterweise kann aufgrund der Druckdifferenz zwischen dem Abgassensorgehäuseinnenraum und dem das Gehäuse umgebenden Raum ein rascher Austausch der Abgase am Sensor mit dem Abgashauptstrom gewährleistet werden, so dass hinreichend niedrige Ansprechzeiten resultieren. Dazu brauchen sich der Sensor oder die Sensoren nicht länger möglichst nahe am bzw. im (Haupt-) Abgasstrom befinden. Folglich kann darauf verzichtet werden eine Temperaturuntergrenze des Sensors im Wesentlichen an eine Abgastemperatur im Hauptabgasstrom angleichen werden braucht. Sensoren, deren Betriebstemperatur in der Regel deutlich unter der Abgastemperatur des Hauptabgasstromes liegen sollte, sind somit thermisch vom (Haupt-) Abgasstrom weitgehend entkoppelt, ohne dass dies eine gewisse räumliche Entkopplung erfordert. Vorteilhafterweise kann so eine Problematik gängiger Sensorgehäusekonzepte aufgelöst werden, bei denen eine Ansprechzeit des Sensors deutlich verschlechtert ist, da aufgrund der erforderlichen räumlichen Trennung von Abgasstrom und Sensor der Austausch des Abgases in Sensornähe mit dem Abgashauptstrom verzögert wird. Zwar trügen einige Konzepte dieser Schwierigkeit Rechnung, z.B. unter Anwendung des Bernoulli-Konzepts, erfordern aber im Gegenzug eine besondere Ausrichtung des Sensorgehäuses im Abgasstrang, welche einen erhöhten konstruktiven Aufwand bedeuten. Gemäß dem hier vorgestellten Ansatz kann auf diesen Aufwand verzichtet werden. Es wird hier eine einfache Lösung ohne weiteren Mehraufwand vorgestellt, die eine starke thermische Entkoppelung mit einem hinreichend raschen Gaswechsel am Ort des Sensors und einem möglichst geringen Teilstrom zum Sensorort gewährleistet.

Die vorliegende Erfindung schafft eine Abgassensoreinheit zum Messen einer Konzentration eines Gases zumindest eines Teils eines Abgasstroms, wobei die Abgassensoreinheit folgende Merkmale aufweist: ein Abgassensorgehäuse mit einer Einlassöffnung des Abgassensorgehäuses, die ausgebildet ist, um fluiddicht mit einer Abgasleitung verbunden zu werden, und einer Auslassöffnung, die ausgebildet ist, um mit einem Bereich außerhalb der Abgasleitung verbunden zu werden; und einen Abgassensor, der in dem Abgassensorgehäuse angeordnet und ausgebildet ist, um die Konzentration des Gases des zumindest einen Teils des Abgases zu messen, wobei das Abgassensorgehäuse derart ausgebildet ist, dass ein Fluid vor einem Entweichen aus der Auslassöffnung einen Funktionskatalysator passiert. Insbesondere kann die Auslassöffnung an einem der Einlassöffnung gegenüberliegenden Ende des Abgassensorgehäuses angeordnet sein.

Die Abgassensoreinheit kann in einem Fahrzeug mit Verbrennungsmotor eingesetzt werden, um einen Anteil an Schadstoffen in einem Rückstand von verbranntem Kraftstoff zu messen. Dieser kann in Form eines Abgasstroms in einer Abgasleitung aus dem Fahrzeug austreten. Das Abgassensorgehäuse kann z.B. ein quaderförmiger Hohlkörper sein, in dessen Inneren der Abgassensor angeordnet ist. Die Einlassöffnung an einem ersten Ende kann in einer kurzen Seite des Hohlkörpers angeordnet sein, und die Auslassöffnung kann in der gegenüberliegenden kurzen Seite des Hohlkörpers angeordnet sein. Die Auslassöffnung kann stets offen oder alternativ so ausgebildet sein, dass sie gegenüber dem Bereich außerhalb der Abgasleitung temporär verschließbar ist. Bei dem Bereich außerhalb der Abgasleitung kann es sich um einen offenen oder geschlossenen Raum handeln, der dadurch gekennzeichnet ist, dass dort ein anderer Druck als innerhalb der Abgasleitung und der mit der Abgasleitung verbundenen Abgassensoreinheit (genauer dem Abgassensorgehäuse) herrscht. Über die fluiddichte Verbindung zwischen der Einlassöffnung des Abgassensorgehäuses und einer entsprechenden Öffnung in der Abgasleitung kann zumindest ein Teil des Abgases aus der Abgasleitung in das Abgassensorgehäuse gelangen, um von dem dort angeordneten Abgassensor in Bezug auf eine Schadstoffkonzentration (oder allgemeiner eine Gaskonzentration) gemessen zu werden. Bei dem Abgassensor kann es sich um einen chemischen Sensor handeln, der eine chemische Information aus dem Abgas in ein elektrisch nutzbares Signal umwandelt.

Gemäß einer Ausführungsform kann das Abgassensorgehäuse eine weitere Auslassöffnung an dem ersten Ende aufweisen. Die weitere Auslassöffnung kann ausgebildet sein, um ebenfalls fluiddicht mit der Abgasleitung verbunden zu werden. Die weitere Auslassöffnung kann z.B. durch einen Steg getrennt benachbart zu der Einlassöffnung angeordnet sein. Auf diese Weise kann ein Teil des durch die Einlassöffnung in das Abgassensorgehäuse strömenden Abgases wieder aus dem Sensorgehäuse in die Abgasleitung zurückgeführt und gegebenenfalls einer Abgasnachbehandlung zugeführt werden.

Ferner kann der Bereich außerhalb der Abgasleitung ein Druckniveau einer Umgebungsluft aufweisen. Auf diese Weise besteht eine Druckdifferenz zwischen den Bereichen innerhalb der Abgasleitung über das Abgassensorgehäuse zu einem Außenbereich außerhalb der Abgasleitung, so dass aufgrund des höheren Drucks innerhalb der Abgasleitung sichergestellt werden kann, dass ein Teilvolumen des Abgases durch das Abgassensorgehäuse über den Abgassensor bzw. dessen Gehäuse im Sinne eines Druckausgleichs durch die Auslassöffnung herausgeleitet werden kann.

Erfindungsgemäß ist das Abgassensorgehäuse derart ausgebildet sein, dass ein Fluid vor einem Entweichen aus der Auslassöffnung einen Funktionskatalysator passiert. Bei dem Fluid kann es sich im Allgemeinen um Abgas aus der Abgasleitung vom Verbrennungsmotor des Fahrzeugs handeln. Vorteilhafterweise kann mittels des Funktionskatalysators das Fluid von Schadstoffen gereinigt werden, bevor es z.B. in die Umwelt entlassen wird.

Zusätzlich oder alternativ kann das Abgassensorgehäuse derart ausgebildet sein, dass ein Fluid vor einem Entweichen aus der Auslassöffnung ein Ventil passiert. Das Ventil kann z.B. als ein Ein-Wege-Venil ausgebildet sein, das lediglich gegenüber dem aus dem Abgassensorgehäuse hinausströmenden Abgas geöffnet ist und in die Gegenrichtung, d.h. dem Bereich außerhalb der Abgasleitung in das Abgassensorgehäuse stets geschlossen ist. Auf diese Weise kann verhindert werden, dass der Abgassensorgehäuseinnenraum z.B. durch Schmutzpartikel aus der Außenluft verunreinigt wird.

Die vorliegende Erfindung schafft ferner eine Abgasmessvorrichtung mit folgenden Merkmalen: einer Abgasleitung mit mindestens einer Öffnung; und einer Abgassensoreinheit gemäß einem der vorangegangenen Ansprüche; wobei die Einlassöffnung der Abgassensoreinheit derart fluiddurchlässig mit der mindestens einen Öffnung der Abgasleitung verbunden ist, dass das Abgassensorgehäuse fluidisch mit dem Inneren der Abgasleitung verbunden ist.

Die Abgasmessvorrichtung kann Teil eines Abgassystems eines Fahrzeugs sein. Das Abgassystem kann z.B. zusätzlich zur Abgasmessvorrichtung einen Schalldämpfer aufweisen, der mittels der Abgasleitung mit der Abgasmessvorrichtung verbunden und dieser in Strömungsrichtung des Abgases nachgeschaltet sein kann.

Gemäß einer Ausführungsform kann die Abgasmessvorrichtung ferner eine Abgasnachbehandlungseinheit mit mindestens einer Abgasnachbehandlungskomponente und eine Abgaswiederzuführungsleitung aufweisen. Die Abgasnachbehandlungseinheit kann in einem Strang mit der Abgasleitung angeordnet sein. Ein erstes Ende der Abgaswiederzuführungsleitung kann mit der Auslassöffnung des Abgassensorgehäuses verbunden sein und ein zweites Ende der Abgaswiederzuführungsleitung mit einer weiteren Öffnung der Abgasleitung verbunden sein, und zwar derart, dass die mindestens eine Abgasnachbehandlungskomponente zwischen der Einlassöffnung des Abgassensorgehäuses und dem zweiten Ende der Abgaswiederzuführungsleitung angeordnet ist.

Die Abgasnachbehandlungseinheit kann z.B. in einer Strömungsrichtung des Abgases vor dem Schalldämpfer angeordnet sein. Beispielsweise kann die Abgasnachbehandlungskomponente ein Katalysator, ein Partikelfilter oder eine Stickstoffoxid-Reduktionseinheit sein. Die Abgasnachbehandlungseinheit kann auch mehr als eine dieser Abgasnachbehandlungskomponenten gleichzeitig aufweisen und in der Abgasleitung eingebettet sein. Die Komponenten können z.B. in dem Strang nacheinander angeordnet sein, jeweils verbunden durch die Abgasleitung, die sich über eine gesamte Länge des Abgassystems erstreckt. Die Abgassensoreinheit kann abhängig von Funktion und Ausführung der Abgasmessvorrichtung an verschiedenen Stellen in dem Strang angeordnet sein, beispielsweise vor der Abgasnachbehandlungseinheit, zwischen Komponenten der Abgasnachbehandlungseinheit oder zwischen der Abgasnachbehandlungseinheit und dem Schalldämpfer. In der Regel herrscht an den Stellen vor und nach der Abgasnachbehandlungseinheit oder zwischen Komponenten der Abgasnachbehandlungseinheit ein unterschiedliches Druckniveau. So nimmt gewöhnlich der Druck in Strömungsrichtung des Abgases in Richtung des Schalldämpfers hin ab. Auf diese Weise kann das in das Abgassensorgehäuse geleitete Abgas aufgrund der herrschenden Druckdifferenz an einer anderen Stelle wieder in die Abgasleitung (zwischen oder nach Komponenten des Abgasbehandlungssystems) zurückgeführt werden.

Ferner kann die Abgasmessvorrichtung ein Gebläse in einem Inneren des Abgassensorgehäuses oder der Abgaswiederzuführungsleitung aufweisen. Auf diese Weise kann eine zusätzliche Druckdifferenz erzeugt und somit eine Strömung bewirkt werden und der Gasaustausch bzw. -transport schneller ablaufen. Die Ansprechzeiten des Abgassensors können so vorteilhaft verkürzt werden. Zudem kann der Sensor unter Umständen weiter entfernt von der Abgasleitung platziert werden. Dies ist insbesondere vorteilhaft bei einer Verwendung eines Abgassensors mit einer niedrigen Betriebstemperatur.

Gemäß einer weiteren Ausführungsform kann die Abgasmessvorrichtung eine Gasmassenstrommesseinheit in einem Inneren des Abgassensorgehäuses aufweisen. Vorteilhafterweise kann so die Menge des am Abgassensor vorbeiströmenden Abgases bestimmt werden. Auf diese Weise kann die Funktionsfähigkeit der Abgassensoreinheit kontrolliert werden, so dass ein Zusammenbrechen des Abgasstromes am Abgassensor erkennt werden kann und nicht ein gemessener Wert als korrekt gewertet wird, wenn tatsächlich der Abgasstrom zum Abgassensor bereits abgerissen ist.

Die vorliegende Erfindung schafft ferner ein Abgasmessverfahren zum Messen einer Konzentration eines Gases zumindest eines Teils eines Abgasstroms in einer Abgasleitung, wobei das Abgasmessverfahren folgende Schritte aufweist: Bereitstellen einer Abgassensoreinheit mit einem Abgassensorgehäuse und einem darin angeordneten Abgassensor, wobei das Abgassensorgehäuse an einem ersten Ende eine fluiddicht mit der Abgasleitung verbundene Einlassöffnung und an einem dem ersten Ende gegenüberliegenden zweiten Ende eine mit einem Bereich außerhalb der Abgasleitung verbundene Auslassöffnung aufweist; Zuführen des zumindest einen Teils des Abgases aus der Abgasleitung in das Abgassensorgehäuse durch die Einlassöffnung; Messen der Konzentration des Gases des zumindest Teils des Abgasstroms mittels des Abgassensors; und Herausleiten des zumindest Teils des Abgases durch die Auslassöffnung in den Bereich außerhalb der Abgasleitung.

Ist die Auslassöffnung offen bzw. wird dieselbe geöffnet, kann aufgrund des in dem Bereich außerhalb der Abgasleitung herrschenden Unterdrucks der Teil des Abgasstroms in das Abgassensorgehäuse zur Messung durch den Abgassensor hineinbefördert werden. Ebenso kann aufgrund der herrschenden Druckdifferenz der Teil des Abgasstroms nach der Messung ohne weiteres in den Bereich außerhalb der Abgasleitung entlassen werden.

Auch kann weiterhin ein Schritt des Rückführens eines Teils des Abgasstromes aus der Abgassensoreinheit durch eine weitere Auslassöffnung in die Abgasleitung ausgeführt werden, wobei der Teil des Abgasstroms, der durch die weitere Auslassöffnung in die Abgasleitung rückgeführt wird größer ist, als der Teil des Abgasstroms, der durch die Auslassöffnung in einen Bereich außerhalb der Abgasleitung heraus geleitet wird.. So kann gewährleistet werden, dass ein Großteil des in das Abgassensorgehäuse strömenden Abgases wieder in die Abgasleitung zurückgelangt und lediglich ein geringer Anteil das Abgassensorgehäuse durch die Auslassöffnung verlässt. Vorteilhafterweise kann so die Abgasmenge, die entweder unbehandelt in die Außenluft ausgestoßen wird oder einer Nachbehandlung wieder zugeführt wird, gering gehalten werden. Der Abgassensor kann auch bei einer derartig geringen Gasmenge, die durch die Auslassöffnung strömt, zuverlässige Messergebnisse liefern.

Die Erfindung wird anhand der beigefügten Zeichnungen beispielhaft näher erläutert. Es zeigen:
- Fig. 1: eine Prinzipdarstellung einer Abgasmessvorrichtung gemäß einem Ausführungsbeispiel der vorliegenden Erfindung;
- Fig. 2: eine Prinzipdarstellung eines Abgassystems unter Verwendung einer Abgasmessvorrichtung gemäß einem Ausführungsbeispiel der vorliegenden Erfindung;
- Fig. 3: eine Prinzipdarstellung eines alternativ ausgestalteten Abgassystems unter Verwendung einer Abgasmessvorrichtung gemäß einem Ausführungsbeispiel der vorliegenden Erfindung;
- Fig. 4: ein Ablaufdiagramm eines Abgasmessverfahrens zum Messen einer Konzentration eines Gases gemäß einem Ausführungsbeispiel der vorliegenden Erfindung; und
- Fig. 5: eine Prinzipdarstellung einer Abgasmessvorrichtung gemäß dem Stand der Technik.

Gleiche oder ähnliche Elemente können in den Figuren durch gleiche oder ähnliche Bezugszeichen versehen sein, wobei auf eine wiederholte Beschreibung verzichtet wird. Ferner enthalten die Figuren der Zeichnungen, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht explizit beschriebenen Kombinationen zusammengefasst werden können. Weiterhin ist die Erfindung in der nachfolgenden Beschreibung unter Verwendung von unterschiedlichen Maßen und Dimensionen erläutert, wobei die Erfindung nicht auf diese Maße und Dimensionen eingeschränkt zu verstehen ist. Ferner können erfindungsgemäße Verfahrensschritte wiederholt sowie in einer anderen als in der beschriebenen Reihenfolge ausgeführt werden. Umfasst ein Ausführungsbeispiel eine "und/oder" Verknüpfung zwischen einem ersten Merkmal/Schritt und einem zweiten Merkmal/Schritt, so kann dies so gelesen werden, dass das Ausführungsbeispiel gemäß einer Ausführungsform sowohl das erste Merkmal / den ersten Schritt als auch das zweite Merkmal /den zweiten Schritt und gemäß einer weiteren Ausführungsform entweder nur das erste Merkmal /Schritt oder nur das zweite Merkmal /Schritt aufweist.

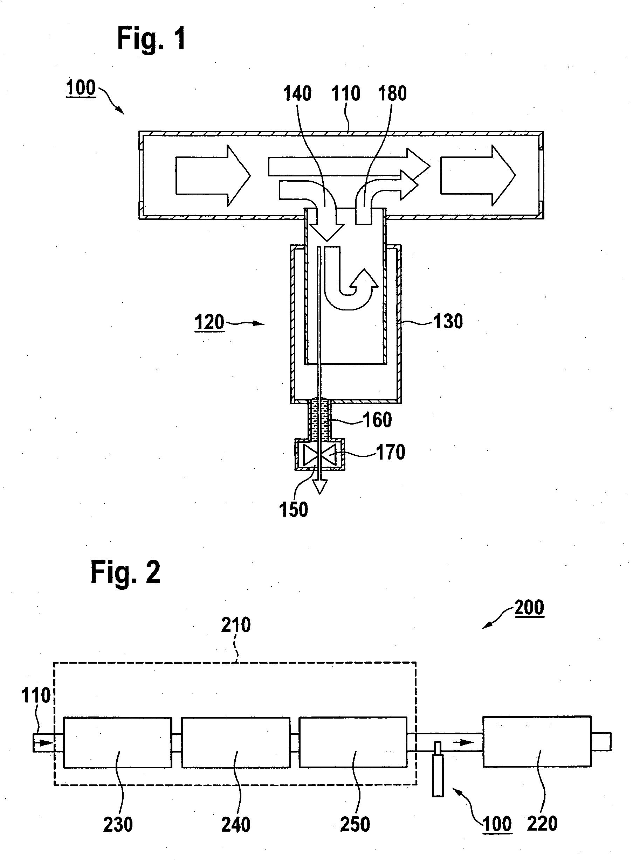

Fig. 1 zeigt eine Prinzipdarstellung einer Abgasmessvorrichtung 100 gemäß einem Ausführungsbeispiel der vorliegenden Erfindung. Gezeigt sind eine Abgasleitung 110 und eine Abgassensoreinheit 120 mit einem Abgassensorgehäuse 130.

Im Sinne der Erfindung zeigt die Darstellung in Fig. 1 ein offenes Abgassensorgehäuse 130, bei dem das über eine Einlassöffnung 140 in das Abgassensorgehäuse 130 eindringende Abgas nicht vollständig in das Abgasrohr bzw. die Abgasleitung 110 zurückfließt, sondern zum Teil über eine weitere Öffnung 150 austritt. In einer bei dem Ausführungsbeispiel in Fig. 1 gezeigten vorteilhaften Erweiterung kann diese Öffnung 150 mit einem Funktionskatalysator 160 und/oder einem Ventil 170 versehen (beispielsweise verschlossen oder steuerbar verschließbar) sein.

Gemäß der Darstellung in Fig. 1 ist die Abgassensoreinheit 120 mit dem Abgasrohr bzw. der Abgasleitung 110 verbunden. Die Abgassensoreinheit 120 setzt sich aus dem Abgassensorgehäuse 130 sowie einem Abgassensor zusammen der im Inneren des Abgassensorgehäuses 130 angeordnet ist. Der Abgassensor ist in Fig. 1 nicht dargestellt. Ein Abgasstrom ist mittels Pfeilen dargestellt, die sowohl eine Strömungsrichtung (Pfeilrichtung) und einen Strömungsverlauf als auch ein Volumen (Dicke des Pfeils) des Abgasstroms anzeigen. Entsprechend zeigt die Darstellung der Abgasmessvorrichtung 100 in Fig. 1, dass ein Teilstrom des Abgasstroms über die Einlassöffnung 140 des Abgassensorgehäuses 130 in die Abgassensoreinheit 120 eintritt. Von diesem Teilstrom wird ein weiterer Teilstrom abgezweigt, der durch die Auslassöffnung 150 wieder aus der Abgassensoreinheit 120 austritt. Der Rest des Teilstroms kehrt über eine weitere Austrittsöffnung 180 aus der Abgassensoreinheit 120 wieder Abgasleitung 110 zurück. Bei dem in Fig. 1 gezeigten Ausführungsbeispiel der Abgasmessvorrichtung 100 passiert der kleinste Teilstrom des Abgasstroms vor dem Austritt durch die Auslassöffnung 150 zuerst den Funktionskatalysator 160 und anschließend das Ventil 170. Alternativ kann die Abgasmessvorrichtung 100 auch lediglich den Funktionskatalysator 160 oder lediglich das Ventil 170 oder aber keines der beiden vorstehend genannten Elemente in oder an der Öffnung aufweisen.

Das in Fig. 1 gezeigte Abgassensorgehäuse 130 verfügt über die zweite Öffnung 150 außerhalb des Abgasrohrs 110. Aufgrund einer Druckdifferenz dP=Pi-Pa zwischen einem Innendruck Pi im Abgasrohr 110 an der Stelle des Abgassensors bzw. der Abgassensoreinheit 120 im Abgasrohr 110 und einem Außendruck Pa in einem Bereich außerhalb der Abgasmessvorrichtung 100 kann eine Strömung durch das komplette Abgassensorgehäuse 130 stattfinden. Die Druckdifferenz dP wird beispielsweise bei der Verbauung des Sensors nach allen gesamten Abgasnachbehandlungssystemen durch einen Schalldämpfer erzeugt. Durch die Ausströmungsstelle 150 ist es im Gegensatz zu einem geschlossenen Sensorgehäuse möglich, die Druckdifferenz dP auszunutzen, um auch an weit vom Hauptabgasstrom entfernten Bereichen im Abgassensorgehäuse 130 eine ausreichend schnelle Anströmung sicherzustellen.

Je weiter ein Bereich im Abgassensorgehäuse 150 vom Abgasrohr 110 entfernt ist, umso größer ist die mögliche Temperaturdifferenz, umso kälter kann also die Betriebstemperatur eines Sensorelementes sein. Dies kann die Lebensdauer von Sensorelementen wesentlich erhöhen bzw. deren Funktionalität überhaupt erst ermöglichen, da insbesondere destruktive Diffusionsprozesse arrheniusartig von der Betriebstemperatur abhängen.

In einer vorteilhaften Erweiterung kann die Öffnung 150 des Abgassensorgehäuses 130 nicht offen und in beide Richtungen durchströmbar sein. Dann stellt das am Auslass befindliche Ventil 170 sicher, dass nur Abgas nach außen dringen kann, ein Eindringen anderer Substanzen aber verhindert wird. Sinnvoll kann dies insbesondere für Betriebszustände sein, bei denen kein Abgas durch das Abgasrohr 110 strömt, also keine Druckdifferenz dP=Pi-Pa zwischen Innen- und Außenraum herrscht. Denn ohne eine positive vorherrschende Druckdifferenz dP>0 könnten Kontaminanten (z.B. Wasser etc.) eindringen, die zu einer Verunreinigung des Sensorgehäuseinnenraums und/oder einer Veränderung des Sensorelementes führen könnten. Weiterhin könnten andere Gase eindringen, so dass die Gaszusammensetzung im Abgassensorgehäuse 130 nicht der Abgaszusammensetzung entspricht und zu einer Verfälschung des Messsignals führen könnte.

In einer weiteren vorteilhaften Erweiterung der Erfindung kann der Auslass 150 mit dem Funktionskatalysator 160 versehen werden. Sinnvoll ist dies insbesondere dann, wenn das Abgassensorgehäuse 130 für einen Abgassensor eingesetzt werden soll, der nicht am Ende aller Abgasnachbehandlungssysteme platziert wird. Denn in diesem Falle entspricht die Abgaszusammensetzung bereits einer sowieso den Abgasstrang verlassenden Abgaszusammensetzung.

Fig. 2 zeigt eine Prinzipdarstellung eines Abgassystems 200 unter Verwendung der Abgasmessvorrichtung 100, gemäß einem Ausführungsbeispiel der vorliegenden Erfindung. Gezeigt sind außerdem die Abgasleitung 110, eine durch eine Strichlinie gekennzeichnete Abgasnachbehandlungseinheit 210 sowie ein Schalldämpfer 220. Eine Fluidströmungsrichtung in dem Abgassystem 200 ist durch Pfeile gekennzeichnet. Gemäß dem im Fig. 2 gezeigten Ausführungsbeispiel des Abgassystems 200 ist in der Fluidströmungsrichtung zuerst die Abgasnachbehandlungseinheit 210, anschließend die Abgasmessvorrichtung 100 und schließlich der Schalldämpfer 220 angeordnet. Bei dem gezeigten Ausführungsbeispiel umfasst die Abgasnachbehandlungseinheit 210 einen Katalysator 230, ein Partikelfilter 240 und eine Stickstoffoxid-Reduktionseinheit bzw. DeNOx-Komponente 250. Die Abgasnachbehandlungseinheit 210 kann auch lediglich eine oder zwei dieser Komponenten oder zusätzliche hier nicht gezeigte Komponenten umfassen. Auch können die Komponenten in einer anderen Reihenfolge angeordnet sein. Die Abgasmessvorrichtung 100 kann z.B. einen OBD-Sensor umfassen. Für einen Einsatz in der Abgasmessvorrichtung 100 kommen jedoch sämtliche Abgassensoren für Verbrennungskraftmaschinen in Frage. Der Einsatz des Abgassensors, der beispielsweise als ein OBD-Sensor ausgebildet sein kann, erfolgt gemäß dem in Fig. 2 gezeigten Ausführungsbeispiel nach allen Abgasnachbehandlungssystemen 230, 240, 250.

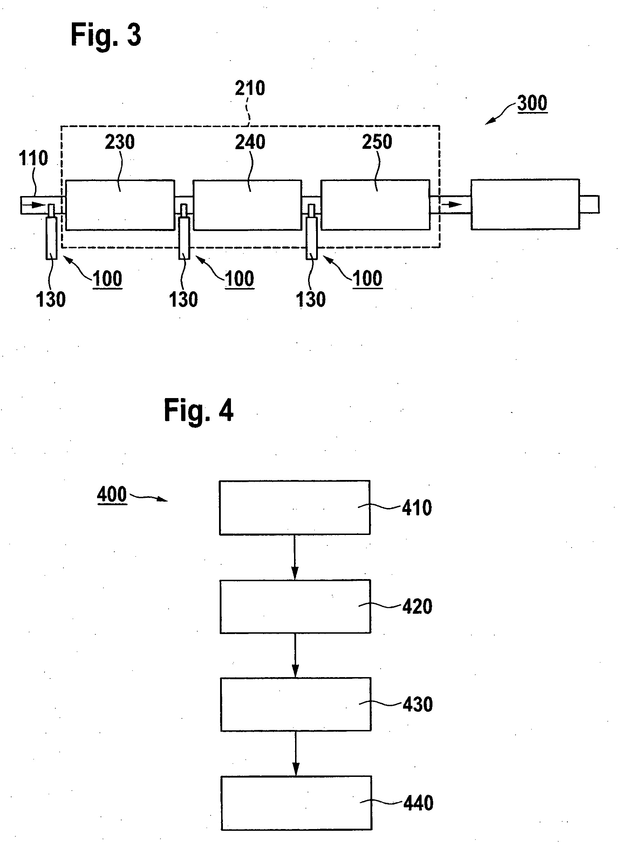

Fig. 3 zeigt eine Prinzipdarstellung eines alternativ angeordneten Abgassystems 300 unter Verwendung der Abgasmessvorrichtung 100, gemäß einem Ausführungsbeispiel der vorliegenden Erfindung. Gezeigt ist wiederum die Abgasnachbehandlungseinheit 210 mit den Elementen Katalysator 230, Partikelfilter 240 und DeNOx-Komponente 250, wobei hier ein Einsatz eines Abgassensors, beispielsweise eines OBD-Sensors, in einer Abgasmessvorrichtung 100 vor der Abgasnachbehandlungseinheit 210 bzw. nach jedem der Abgasnachbehandlungselemente 230, 240, 250 erfolgt. Es kann auch lediglich eine Abgasmessvorrichtung 100 oder mehr als die gezeigten Abgasmessvorrichtungen 100 an unterschiedlichen Stellen innerhalb des Abgassystems 300 angeordnet sein.

Wird das Abgassensorgehäuse 130 für einen Abgassensor verwendet, der vor bzw. innerhalb verschiedener Abgasnachbehandlungselemente 230, 240, 250 eingesetzt wird, wie es in Fig. 2 gezeigt ist, kann durch Katalysatoren 230 wie beispielsweise einen Oxidationskatalysator nach der Messung der Abgaszusammensetzung durch ein Sensorelement ein Umsatz der Schadgase bewirkt werden, so dass die aus dem Abgasstrang austretenden Schadgase in ihrer Konzentration vermindert werden können. Alternativ ist es möglich, den Auslass des Abgassensorgehäuses 130 wieder mit dem Abgasrohr 110 zu verbinden, so dass das durch das Sensorgehäuse 130 strömende Abgas an einer anderen Stelle wieder dem Hauptabgasstrom zugeführt werden kann. Herrscht an dieser anderen Stelle ein geringerer Abgasinnendruck Pi, so bewirkt dies eine Strömung. Alternativ kann beispielsweise durch ein Gebläse in dieser Zuführung eine Strömung ausgelöst werden. Eine derartige Verbindung zwischen dem Sensorgehäuse 130 und dem Abgasrohr 110 ist in der Darstellung in Fig. 3 nicht enthalten.

In einer weiteren vorteilhaften Erweiterung der Erfindung kann mithilfe einer Vorrichtung zum aktiven Transport des Abgases, beispielsweise einem elektrisch getriebenen Gebläse, eine Strömung des Abgases durch das Abgassensorgehäuse erzeugt werden. Ein derartiges Gebläse ist in den Figuren nicht gezeigt.

Außerdem kann es von Vorteil sein, eine Gasmassenstrommesseinheit in das Abgassensorgehäuse zu integrieren, insbesondere an der Öffnung des Gehäuses, durch die das Abgas in die Umgebung strömt. Hierdurch ist es beispielweise möglich, die Druckdifferenz dP zwischen dem Innendruck Pi im Abgasrohr an der Einbaustelle des Abgassensors und dem Umgebungsdruck Pa zu bestimmen. Eine derartige Gasmassenstrommesseinheit ist in den Figuren nicht gezeigt.

Fig. 4 zeigt ein Ablaufdiagramm eines Abgasmessverfahrens 400 zum Messen einer Konzentration eines Gases gemäß einem Ausführungsbeispiel der vorliegenden Erfindung. In einem Schritt 410 wird eine Abgassensoreinheit mit einem Abgassensorgehäuse und einem darin angeordneten Abgassensor bereitgestellt. Das Abgassensorgehäuse werde eine Einlassöffnung und eine Auslassöffnung auf. Die Einlassöffnung kann fluiddicht mit einer einen Abgasstrom führenden Abgasleitung verbunden sein. Durch die Einlassöffnung strömt in einem Schritt 420 zumindest ein Teil des Abgases aus der Abgasleitung in das Abgassensorgehäuse ein. In einem Schritt 430 wird eine Konzentration des in das Abgassensorgehäuse geströmten Gases des zumindest Teils des Abgases mittels des Abgassensors gemessen, der in dem Abgassensorgehäuse angeordnet ist. In einem Schritt 440 wird der zumindest Teils des Abgases nach der Messung durch den Sensor durch die Auslassöffnung des Abgassensorgehäuses in einen Bereich außerhalb der Abgasleitung herausgeleitet.

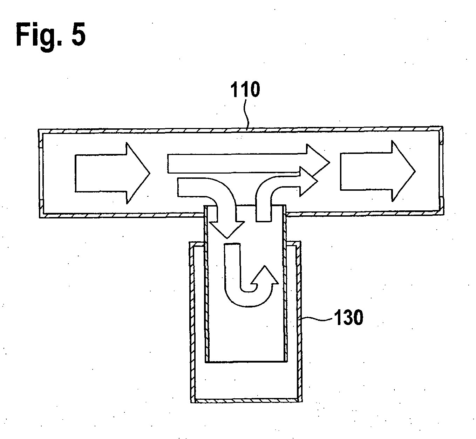

Fig. 5 zeigt eine Prinzipdarstellung einer Abgasmessvorrichtung mit einem geschlossenen Abgassensorgehäuse 130 nach dem Stand der Technik. Bei der hier gezeigten Abgasmessvorrichtung strömt 100% des ins Abgassensorgehäuse 130 eindringenden Abgases wieder in das Abgasrohr 110 zurück, was wegen einem hohen Flusswiderstand des Gases im Abgassensor einen kurzen Gasweg durch den Sensor erfordert und daher auch hohe Betriebstemperaturen des Abgassensors zur Folge hat. Hierdurch können einige Sensortypen, die diese hohen Temperaturen nicht aushalten, nicht mehr zur Abgasmessung eingesetzt werden oder altern sehr schnell.

## Patentansprüche

1. Abgassensoreinheit (120) zum Messen einer Konzentration eines Gases zumindest eines Teils eines Abgasstroms, wobei die Abgassensoreinheit folgende Merkmale aufweist:
ein Abgassensorgehäuse (130) mit einer Einlassöffnung (140), die ausgebildet ist, um fluiddicht mit einer Abgasleitung (110) verbunden zu werden, und einer Auslassöffnung (150), die ausgebildet ist, um mit einem Bereich außerhalb der Abgasleitung verbunden zu werden; und
einen Abgassensor, der in dem Abgassensorgehäuse angeordnet und ausgebildet ist, um die Konzentration des Gases aus dem zumindest einen Teil des Abgasstroms zu messen,
**dadurch gekennzeichnet, dass** das Abgassensorgehäuse(130) derart ausgebildet ist, dass ein Fluid vor einem Entweichen aus der Auslassöffnung (150) einen Funktionskatalysator (160) passiert.

2. Abgassensoreinheit (120) gemäß Anspruch 1, **dadurch gekennzeichnet, dass** das Abgassensorgehäuse (130) eine weitere Auslassöffnung (180) an dem ersten Ende aufweist, die ausgebildet ist, um fluiddicht mit der Abgasleitung (110) verbunden zu werden.

3. Abgassensoreinheit (120) gemäß einem der vorangegangenen Ansprüche, **dadurch gekennzeichnet, dass** der Bereich außerhalb der Abgasleitung (110) ein Druckniveau einer Umgebungsluft aufweist.

4. Abgassensoreinheit (120) gemäß einem der vorangegangenen Ansprüche, **dadurch gekennzeichnet, dass** das Abgassensorgehäuse (130) derart ausgebildet ist, dass ein Fluid vor einem Entweichen aus der Auslassöffnung (150) ein Ventil (170) passiert.

5. Abgasmessvorrichtung (100) mit folgenden Merkmalen:
einer Abgasleitung (110) mit mindestens einer Öffnung; und
einer Abgassensoreinheit (120) gemäß einem der vorangegangenen Ansprüche; wobei die Auslassöffnung (150) der Abgassensoreinheit derart fluiddurchlässig mit der mindestens einen Öffnung der Abgasleitung verbunden ist, dass das Abgassensorgehäuse fluidisch mit dem Inneren der Abgasleitung verbunden ist.

6. Abgasmessvorrichtung (100) gemäß Anspruch 5, **dadurch gekennzeichnet, dass** die Abgasmessvorrichtung ferner eine Abgasnachbehandlungseinheit (210) mit mindestens einer Abgasnachbehandlungskomponente (230, 240, 250) und eine Abgaswiederzuführungsleitung aufweist, wobei die Abgasnachbehandlungseinheit in einem Strang mit der Abgasleitung (110) angeordnet ist, und wobei ein erstes Ende der Abgaswiederzuführungsleitung fluiddicht mit der Auslassöffnung (150) des Abgassensorgehäuses (130) verbunden ist und ein zweites Ende der Abgaswiederzuführungsleitung fluiddicht mit einer weiteren Öffnung der Abgasleitung verbunden ist, derart dass die mindestens eine Abgasnachbehandlungskomponente zwischen der Einlassöffnung (140) des Abgassensorgehäuses und dem zweiten Ende der Abgaswiederzuführungsleitung angeordnet ist.

7. Abgasmessvorrichtung (100) gemäß Anspruch 5 oder 6, **dadurch gekennzeichnet, dass** die Abgasmessvorrichtung ein Gebläse in einem Inneren des Abgassensorgehäuses (130) oder der Abgaswiederzuführungsleitung aufweist.

8. Abgasmessverfahren (400) zum Messen einer Konzentration eines Gases zumindest eines Teils eines Abgasstroms in einer Abgasleitung (110), wobei das Verfahren folgende Schritte aufweist:
Bereitstellen (410) einer Abgassensoreinheit (120) mit einem Abgassensorgehäuse (130) und einem darin angeordneten Abgassensor, wobei das Abgassensorgehäuse an einem ersten Ende eine fluiddicht mit der Abgasleitung verbundene Einlassöffnung (140) und an einem dem ersten Ende gegenüberliegenden zweiten Ende eine Auslassöffnung (150) aufweist, die das Innere des Abgassensorgehäuses mit einem Bereich außerhalb der Abgasleitung fluidisch verbindet;
Zuführen (420) des zumindest einen Teils des Abgasstroms aus der Abgasleitung in das Abgassensorgehäuse durch die Einlassöffnung;
Messen (430) der Konzentration des Gases des zumindest Teils des Abgasstroms mittels des Abgassensors; und
Herausleiten (440) des zumindest einen Teils des Abgasstroms durch die Auslassöffnung in den Bereich außerhalb der Abgasleitung, wobei das Abgassensorgehäuse (130) derart ausgebildet ist, dass ein Fluid vor einem Entweichen aus der Auslassöffnung (150) einen Funktionskatalysator (160) passiert.

9. Verfahren gemäß Anspruch 8, **dadurch gekennzeichnet, dass** ferner ein Schritt des Rückführens eines Teils des Abgasstromes aus der Abgassensoreinheit (120) durch eine weitere Auslassöffnung (150) in die Abgasleitung (110) ausgeführt wird, wobei der Teil des Abgasstroms, der durch die weitere Auslassöffnung in die Abgasleitung (110) rückgeführt wird größer ist, als der Teil des Abgasstroms, der durch die Auslassöffnung in einen Bereich außerhalb der Abgasleitung heraus geleitet wird.

## Claims

1. Exhaust-gas sensor unit (120) for measuring a concentration of a gas of at least a part of an exhaust-gas stream, wherein the exhaust-gas sensor unit has the following features:
an exhaust-gas sensor housing (130) having an inlet opening (140) which is designed for being connected in fluid-tight fashion to a exhaust-gas line (110), and having an outlet opening (150) which is designed for being connected to a region outside the exhaust-gas line; and
an exhaust-gas sensor which is arranged in the exhaust-gas sensor housing and which is designed for measuring the concentration of the gas from the at least one part of the exhaust-gas stream,
**characterized in that** the exhaust-gas sensor housing (130) is designed such that a fluid passes a functional catalyst (160) before emerging from the outlet opening (150).

2. Exhaust-gas sensor unit (120) according to Claim 1, **characterized in that** the exhaust-gas sensor housing (130) has, at the first end, a further outlet opening (180) which is designed for being connected in fluid-tight fashion to the exhaust-gas line (110).

3. Exhaust-gas sensor unit (120) according to one of the preceding claims, **characterized in that** the region outside the exhaust-gas line (110) is at a pressure level of ambient air.

4. Exhaust-gas sensor unit (120) according to one of the preceding claims, **characterized in that** the exhaust-gas sensor housing (130) is designed such that a fluid passes a valve (170) before emerging from the outlet opening (150).

5. Exhaust-gas measurement device (100) having the following features:
an exhaust-gas line (110) having at least one opening; and
an exhaust-gas sensor unit (120) according to one of the preceding claims; wherein the outlet opening (150) of the exhaust-gas sensor unit is connected in fluid-permeable fashion to the at least one opening of the exhaust-gas line such that the exhaust-gas sensor housing is fluidically connected to the interior of the exhaust-gas line.

6. Exhaust-gas measurement device (100) according to Claim 5, **characterized in that** the exhaust-gas measurement device furthermore has an exhaust-gas aftertreatment unit (210) with at least one exhaust-gas aftertreatment component (230, 240, 250) and has an exhaust-gas refeeding line, wherein the exhaust-gas aftertreatment unit is arranged as one strand with the exhaust-gas line (110), and wherein a first end of the exhaust-gas refeeding line is connected in fluid-tight fashion to the outlet opening (150) of the exhaust-gas sensor housing (130), and a second end of the exhaust-gas refeeding line is connected in fluid-tight fashion to a further opening of the exhaust-gas line, such that the at least one exhaust-gas aftertreatment component is arranged between the inlet opening (140) of the exhaust-gas sensor housing and the second end of the exhaust-gas refeeding line.

7. Exhaust-gas measurement device (100) according to Claim 5 or 6, **characterized in that** the exhaust-gas measurement device has a blower in an interior space of the exhaust-gas sensor housing (130) or the exhaust-gas refeeding line.

8. Exhaust-gas measurement method (400) for measuring a concentration of a gas of at least a part of an exhaust-gas stream in an exhaust-gas line (110), wherein the method has the following steps:
providing (410) an exhaust-gas sensor unit (120) having an exhaust-gas sensor housing (130) and having an exhaust-gas sensor arranged therein, wherein the exhaust-gas sensor housing has, at a first end, an inlet opening (140) connected in fluid-tight fashion to the exhaust-gas line and, at a second end situated opposite the first end, an outlet opening (150) which fluidically connects the interior of the exhaust-gas sensor housing to a region outside the exhaust-gas line;
feeding (420) the at least one part of the exhaust-gas stream from the exhaust-gas line into the exhaust-gas sensor housing through the inlet opening;
measuring (430) the concentration of the gas of the at least one part of the exhaust-gas stream by means of the exhaust-gas sensor; and
conducting out (440) the at least one part of the exhaust-gas stream through the outlet opening into the region outside the exhaust-gas line, wherein the exhaust-gas sensor housing (130) is designed such that a fluid passes a functional catalyst (160) before emerging from the outlet opening (150).

9. Method according to Claim 8, **characterized in that**, furthermore, a step for returning a part of the exhaust-gas stream from the exhaust-gas sensor unit (120) through a further outlet opening (150) into the exhaust-gas line (110) is performed, wherein that part of the exhaust-gas stream which is returned through the further outlet opening into the exhaust-gas line (110) is greater than that part of the exhaust-gas stream which is conducted out through the outlet opening into a region outside the exhaust-gas line.

## Revendications

1. Unité de capteur de gaz d'échappement (120) pour mesurer une concentration d'un gaz d'au moins une partie d'un flux de gaz d'échappement, l'unité de capteur de gaz d'échappement présentant les caractéristiques suivantes :
un boîtier de capteur de gaz d'échappement (130) comprenant une ouverture d'entrée (140), qui est réalisée pour être reliée de manière étanche aux fluides à une conduite de gaz d'échappement (110), et une ouverture de sortie (150), qui est réalisée pour être reliée à une région à l'extérieur de la conduite de gaz d'échappement ; et
un capteur de gaz d'échappement qui est disposé dans le boîtier de capteur de gaz d'échappement et est réalisé pour mesurer la concentration du gaz provenant de l'au moins une partie du flux de gaz d'échappement,
**caractérisée en ce que** le boîtier de capteur de gaz d'échappement (130) est réalisé de telle sorte qu'un fluide traverse un catalyseur fonctionnel (160) avant de s'échapper hors de l'ouverture de sortie (150).

2. Unité de capteur de gaz d'échappement (120) selon la revendication 1, **caractérisée en ce que** le boîtier de capteur de gaz d'échappement (130) comprend une ouverture de sortie supplémentaire (180) à la première extrémité, laquelle est réalisée pour être reliée de manière étanche aux fluides à la conduite de gaz d'échappement (110).

3. Unité de capteur de gaz d'échappement (120) selon l'une quelconque des revendications précédentes, **caractérisée en ce que** la région à l'extérieur de la conduite de gaz d'échappement (110) présente un niveau de pression d'un air ambiant.

4. Unité de capteur de gaz d'échappement (120) selon l'une quelconque des revendications précédentes, **caractérisée en ce que** le boîtier de capteur de gaz d'échappement (130) est réalisé de telle sorte qu'un fluide traverse une soupape (170) avant de s'échapper hors de l'ouverture de sortie (150).

5. Dispositif de mesure de gaz d'échappement (100) présentant les caractéristiques suivantes :
une conduite de gaz d'échappement (110) comprenant au moins une ouverture ; et
une unité de capteur de gaz d'échappement (120) selon l'une quelconque des revendications précédentes ; l'ouverture de sortie (150) de l'unité de capteur de gaz d'échappement étant reliée de manière perméable aux fluides à l'au moins une ouverture de la conduite de gaz d'échappement de telle sorte que le boîtier de capteur de gaz d'échappement soit relié de manière fluidique à l'intérieur de la conduite de gaz d'échappement.

6. Dispositif de mesure de gaz d'échappement (100) selon la revendication 5, **caractérisé en ce que** le dispositif de mesure de gaz d'échappement comprend en outre une unité de post-traitement de gaz d'échappement (210) dotée d'au moins un composant de post-traitement de gaz d'échappement (230, 240, 250) et une conduite de ré-acheminement de gaz d'échappement, l'unité de post-traitement de gaz d'échappement étant disposée dans une ligne avec la conduite de gaz d'échappement (110), et une première extrémité de la conduite de ré-acheminement de gaz d'échappement étant reliée de manière étanche aux fluides à l'ouverture de sortie (150) du boîtier de capteur de gaz d'échappement (130) et une deuxième extrémité de la conduite de ré-acheminement de gaz d'échappement étant reliée de manière étanche aux fluides à une ouverture supplémentaire de la conduite de gaz d'échappement, de telle sorte que l'au moins un composant de post-traitement de gaz d'échappement soit disposé entre l'ouverture d'entrée (140) du boîtier de capteur de gaz d'échappement et la deuxième extrémité de la conduite de ré-acheminement de gaz d'échappement.

7. Dispositif de mesure de gaz d'échappement (100) selon la revendication 5 ou 6, **caractérisé en ce que** le dispositif de mesure de gaz d'échappement comprend un ventilateur dans l'intérieur du boîtier de capteur de gaz d'échappement (130) ou de la conduite de ré-acheminement de gaz d'échappement.

8. Procédé de mesure de gaz d'échappement (400) pour mesurer une concentration d'un gaz d'au moins une partie d'un flux de gaz d'échappement dans une conduite de gaz d'échappement (110), le procédé comprenant les étapes suivantes :
fourniture (410) d'une unité de capteur de gaz d'échappement (120) dotée d'un boîtier de capteur de gaz d'échappement (130) et d'un capteur de gaz d'échappement disposé dans celui-ci, le boîtier de capteur de gaz d'échappement comprenant, à une première extrémité, une ouverture d'entrée (140) reliée de manière étanche aux fluides à la conduite de gaz d'échappement et, à une deuxième extrémité opposée à la première extrémité, une ouverture de sortie (150) qui relie de manière fluidique l'intérieur du boîtier de capteur de gaz d'échappement à une région à l'extérieur de la conduite de gaz d'échappement ;
acheminement (420) de l'au moins une partie du flux de gaz d'échappement provenant de la conduite de gaz d'échappement dans le boîtier de capteur de gaz d'échappement à travers l'ouverture d'entrée ;
mesure (430) de la concentration du gaz de l'au moins une partie du flux de gaz d'échappement au moyen du capteur de gaz d'échappement ; et
évacuation (440) de l'au moins une partie du flux de gaz d'échappement à travers l'ouverture de sortie dans la région à l'extérieur de la conduite de gaz d'échappement, le boîtier de capteur de gaz d'échappement (130) étant réalisé de telle sorte qu'un fluide traverse un catalyseur fonctionnel (160) avant de s'échapper hors de l'ouverture de sortie (150).

9. Procédé selon la revendication 8, **caractérisé en ce qu'**en outre une étape de recirculation d'une partie du flux de gaz d'échappement provenant de l'unité de capteur de gaz d'échappement (120) à travers une ouverture de sortie supplémentaire (150) dans la conduite de gaz d'échappement (110) est effectuée, la partie du flux de gaz d'échappement qui est recirculée à travers l'ouverture de sortie supplémentaire dans la conduite de gaz d'échappement (110) étant plus grande que la partie du flux de gaz d'échappement qui est évacuée à travers l'ouverture de sortie dans une région à l'extérieur de la conduite de gaz d'échappement.
